# EUROPEAN PATENT SPECIFICATION

(11) **EP 2 098 109 B1**
(45) Date of publication and mention of the grant of the patent: **30.03.2011**
(21) Application number: 08101053.0
(22) Date of filing: 29.01.2008
(51) Int. Cl.: A01D 43/08

(54) **Harvesting machine with granulometric sensor**
Erntemaschine mit granulometrischem Sensor
Machine de récolte avec détecteur granulométrique

(43) Date of publication of application: 09.09.2009
(73) Proprietor: Deere & Company, Moline, IL 61265-8098 (US); Cemagref, 63172 Aubière Cedex (FR)
(72) Inventor: Bernard, Benet, 63370, Lempdes (FR); Michel, Berducat, 63960, Veyre Monton (FR)
(74) Representative: Holst, Sönke

(56) References cited:
- EP-A- 1 671 530
- US-A- 6 119 442

## Description

The invention pertains to a harvesting machine comprising:
a chopper means for cutting harvested crop into short lengths,
a crop feed arrangement for feeding the harvested crop to the chopper means,
a drive arrangement for driving the crop feed arrangement and the chopper means, the drive arrangement including at least one adjustable component for driving at least one of said crop feed arrangement or chopper means at a variable speed so as to change the length into which the harvested crop is cut,
a control device connected to the adjustable component and to a granulometric sensor, said control device operative to automatically control the adjustable component such that the length of the chopped crop detected by the granulometric sensor corresponds to a desired length,
the granulometric sensor comprising a camera arranged to view upon the chopped crop downstream the chopper means and to provide image data representing images of the chopped crop particles to an image processing system that is operable to derive the length of the chopped crop particles from the image data.

### Prior art

Forage harvesters, also called field choppers, are employed in agriculture for cutting and picking up harvested crops, for example, grass or corn, which is normally used as fodder for cattle. To promote the digestibility of the fodder, the cut length of the harvested crop is very important. In current forage harvesters, means have been used for adjusting the cutting length of the chopping device wherein hydraulic motors, adjustable either continuously or in steps or shifting transmissions have been used.

A problem with forage harvesters is that the real cutting length does not always correspond to a theoretical cutting length that can be calculated from the speed with which the crop is fed to the chopper means and the speed of the chopper means and the number of knives distributed around its circumference, since, for example, slippage may occur when the crop has a relatively high moisture. The length of cut thus can depend on crop properties as moisture and the variety of crop. This can cause undesired long fodder particles causing problems in ensiling (mouldiness) and digesting the fodder by the animals. In order to solve this problem, EP 1 671 530 A proposes that a control device adjusting the length of cut is connected to a sensor providing information about a granulometric parameter of the chopped crop. The granulometric sensor comprises a camera viewing upon the cut crop in the spout of the forage harvester. The camera is connected to an image processing system that derives the particle size and submits it to the control device. The latter is thus enabled to adjust the length of cut in a manner that the desired cutting length is obtained.

Besides the problem that the speed of the particles in the spout is in the order of 100 km/h, that can be resolved with a camera having a high speed shutter and/or a high speed flash for illuminating the crop, also the image processing system needs to work sufficiently fast to derive the desired particle size data in a sufficiently short time to obtain a prompt reaction to changes in the real cutting length.

### Task of the Invention

The problem underlying the invention is to improve a harvesting machine with a chopper means and a granulometric sensor using a camera and an image processing system for detecting the cut particle sizes in a manner such that changing particle sizes can be promptly detected.

This is achieved by the teaching of claims 1 and 4. The dependent claim quotes features improving the solution in an advantageous manner.

A harvesting machine comprises a chopper means for cutting harvested crop into short lengths, a crop feed arrangement for feeding the harvested crop to the chopper means, and a drive arrangement for driving the crop feed arrangement and the chopper means. The drive arrangement includes at least one adjustable component for driving at least one of said crop feed arrangement or chopper means at a variable speed so as to change the length into which the harvested crop is cut. A control device is connected to the adjustable component and to a granulometric sensor. The control device automatically controls the adjustable component such that the length of the chopped crop detected by the granulometric sensor corresponds to a desired length. The granulometric sensor comprises a camera arranged to view upon the chopped crop downstream the chopper means and to provide image data representing images of the chopped crop particles to an image processing system that derives the length of the chopped crop particles from the image data by investigating for each particle in an image whether it falls through a virtual grid of predetermined size and shape in order to derive the length of the chopped crop particles.

Thus, the invention proposes to apply a sieving principle to the particles appearing in the images of the cut crop to derive the actual lengths of the particles. The particles in the image are separated according to their size by applying a virtual grid with a predetermined shape and size and checking whether they fall through the grid or not. All particles having a size fitting through the grid are falling down, while all the particles in the image having a size superior to the grid size are staying on the grid. The area of the particles staying on the grid is compared with the area of all particles before the sieving operation to derive the portion of particles exceeding the grid size. The shape of the grid can be circular or rectangular (especially squared).

An advantage of the proposed image processing system is that the particle discrimination can be performed in a relatively fast time. Thus, the reaction time of the granulometric sensor to changing particle sizes is short, such that undesired long particles in the chopped crop can be reduced or avoided.

In a preferred embodiment, the image processing system applies subsequently grids of different sizes to the particles in the image to obtain a size distribution. The control unit is thus able to reduce the length of cut if in the size distribution the portion of particles exceeding the desired length is above a predetermined threshold.

### Embodiment of the invention

The figures show one embodiment of the invention, which is described in greater detail below.
Figure 1 is a schematic, left side elevational view of a harvesting machine with which the present invention is particularly adapted for use.
Figure 2 is a schematic side view of a sensor suitable for measuring the size of chopped crop.
Figure 3 is a schematic illustration of the device for effecting automatic adjustment of the cutting length.
Figure 4 is a schematic illustration of the sieving method applied by the control device.
Figure 5 is a flow diagram according to which the control device applies the sieving method to derive the particle length.

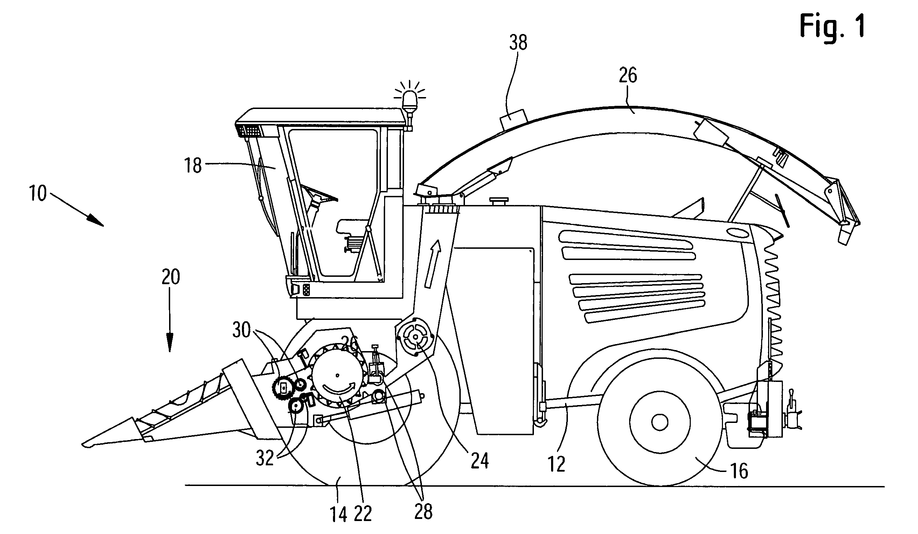

Referring now to Figure 1, there is shown a self-propelled harvesting machine 10 in the form of a forage harvester including a main frame 12 supported on front and rear wheels 14 and 16. The harvesting machine 10 is operated from a driver's cab 18, from which a harvested material pickup device 20 is visible. The crop, e.g., corn, grass or the like, picked up from the ground by the corn harvesting device 20, is moved by means of four front feedrolls 30, 32 to a chopper means 22 in form of a chopper drum or cutter head, which chops the crop into small pieces and sends it to a conveyor unit 24. The material passes from the harvesting machine 10 to a side trailer via a discharge chute 26, which may be adjusted about an upright axis. Located between the chopper means 22 and the conveyor unit 24 is a kernel processor device including two cooperating rollers 28, which act to feed the conveyed material tangentially to the conveyor unit 24. Upon the top surface of the discharge chute 26, a crop parameter sensor 38 is mounted.

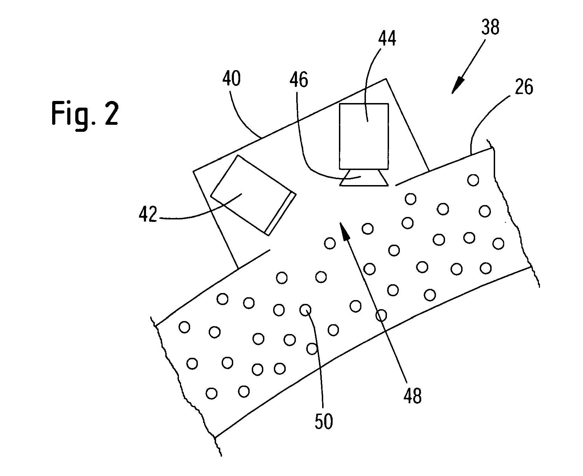

In Figure 2, the crop parameter sensor 38 is shown in greater detail. The sensor 38 is mounted within a light-tight, protective housing 40 mounted to the discharge chute 26. Within the housing 40, a flashlight 42 and an electronic camera 44 are provided. The camera 44 has a lens 46 viewing through an opening 48 into the interior of the discharge chute 26, such that an image of the chopped crop particles 50 flowing through the discharge chute 26 is obtained. Another possible embodiment comprises a ring flash around the camera lens or a flashlight on both sides of the camera 44, the latter being in a plane perpendicular to the opening window 48. The flashlight 42 is operable to submit subsequently flashes, e. g. in intervals of 500 ms or less, with very short time duration (10 µs or less) coupled with the camera 44, upon the chopped crop particles 50 in the viewing angle of the lens 46. Although not shown, on the underside of the discharge chute 26, below the opening 48, a cover for avoiding or reducing entry of ambient light might be provided. Within the opening 48, a transparent screen may be provided, preferably with high scratch resistance, e.g. of sapphire glass.

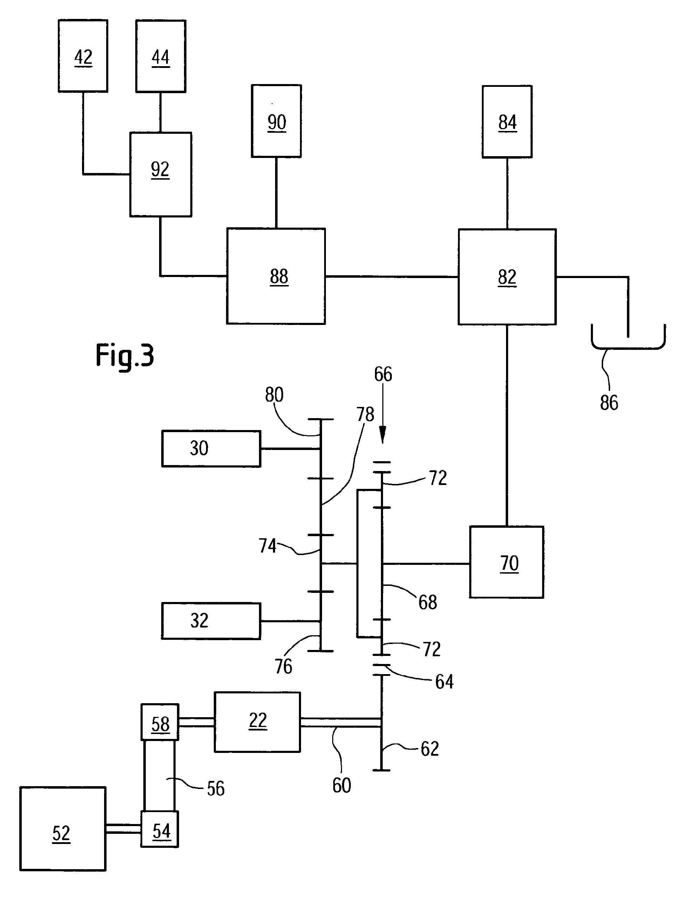

The camera 44 provides an electronic signal containing a two dimensional image information to a digital image processing system 92 (Figure 3) using a microprocessor or microcontroller. The image processing system 92 is operable to process the image information, and derives data on granulometric characteristics of the crop particles 50 under consideration of the viewing angle and the distance between the camera 44 and the flow direction of the chopped crop particles 50. The data on granulometric characteristics of the crop particles 50 comprise among others the length of the particles 50. The image processing system 92 also controls the flashlight 42 and instructs it to submit a flash once processing of a previously taken image is finalized and a capacitor of the flashlight is sufficiently charged such that a flash can be provided.

The present invention allows to control the cut length of the chopped crop with a desired cut length and to adjust the cut length such that the desired cut length is obtained. The cut length of the chopped crop that is ejected from the discharge chute 26 depends on the rotating speed of the front feedrolls 30, 32, on the speed of the chopper means 22, and on the number of blades or knives attached to the chopper means 22. Figure 3 shows a detailed illustration of the drive arrangement for the chopper means 22 and the front feedrolls 30, 32, and the device for automatic adjustment of the cutting length.

An internal combustion engine 52 operating at constant speed, while in a harvest mode, drives a transmission belt 56 via a pulley 54 which includes a disengageable coupling. The transmission belt 56, in turn, drives a pulley 58 coupled to the chopper means 22. The chopper means 22 includes a solid shaft 60 which drives a cogwheel or gear 62 which is meshed with a ring gear 64 of a planetary gear train 66. The planetary gear train 66 includes a sun wheel 68 coupled to a hydraulic motor 70. Planet gears 72 of the planetary gear train 66 are coupled via a planet carrier with a cogwheel or gear 74 that drives the lower front press rollers 32 via an additional cogwheel or gear 76, and drive the upper front feedrolls 30 in a direction opposite that of the lower front press rollers, via additional cogwheels or gears 78 and 80. Due to this configuration, the chopper means 22 is driven at a constant rotational speed. The rotational speed of the front feedrolls 30, 32 depends on the rotational speed and direction of the hydraulic motor 70. The latter serves as an adjustable component for driving a crop feed component (feedrolls 30, 32) at a variable speed.

The hydraulic motor 70 is connected, by a valve unit 82, to a pressurized hydraulic fluid source 84 and to a hydraulic fluid supply tank 86. The valve unit 82 is connected electrically to a control device 88 that can be actuated to control the valve unit 82 such that the hydraulic motor 70 will rotate at a rotational speed and direction specified by the control unit 88. The control unit 88 is thus suited for continuous adjustment of the cutting length of the ejected material.

The control unit 88 is also connected to an input means 90 for inputting a desired length of cut. The control unit 88, during operation, compares the desired length of cut input by the operator via the input means 90 with the measured length of cut provided by the image processing system 92 and adjusts the speed of the motor 70 by means of the valve unit 82 such that the desired cut length and the measured cut length are at least approximately equal.

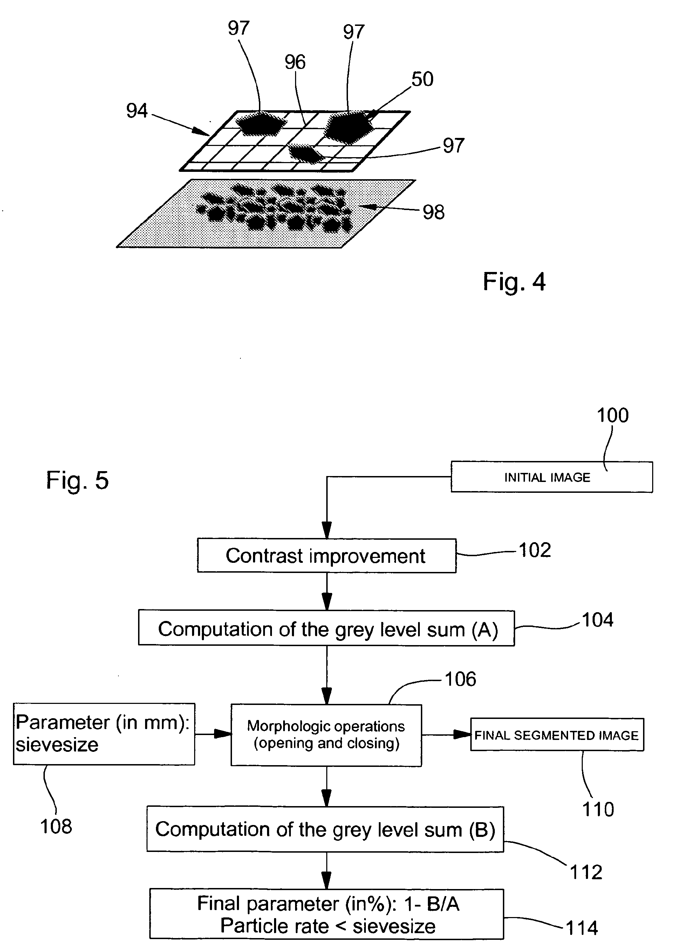

Figure 4 shows a schematic representation of the method according to which the image processing system 92 identifies the length of the cut crop particles 50. A virtual sieve 94 having a grid 96 with rectangular, in particular square shaped, openings is laid below the particles 50. Only particles 97 from the cut crop particles 50 that do not fall through the sieve 94 remain upon it, while the particles 98 fitting through the grids 96 of the sieve 94 are falling down. By comparing the area of the particles 97 upon the sieve 94 with the area of all particles 97 and 98 (corresponds to the cut crop particles 50), the portion of particles 97 exceeding the size of the grid 96 is determined. This operation can be subsequently repeated with different grid sizes (starting with the smallest size) to obtain a size distribution of the particles 50 in the image. Since the length of the particles 50 normally is larger than their width (because the cut length is usually greater than the diameter of the corn stalks), the grid size can be considered as the particle length. Once the distribution reveals that the portion of particles 97 exceeding the desired grid size or particle length is above a predetermined threshold, the control unit 88 will reduce the length of cut by increasing the speed of the feedrolls 30, 32.

In figure 5, the operation of the image processing system 92 is shown in more detail. In step 100, image data representing an initial image are received from the camera 44 and stored in a memory of the image processing system 92. In step 102, the contrast of the image is improved, using known techniques. In step 104, the grey level sum of the image is calculated, and in step 106, the sieving operation shown in figure 4 is performed. A parameter of the sieving operation is the sieve size (step 108), and the result thereof is a final segmented image (step 110), containing only particles 97 not falling through the virtual sieve (see figure 4). From this image, the grey level sum is calculated, step 112, and finally, the portion of particles that are smaller than the sieve size are calculated in step 114. In a similar manner, by dividing the result of step 112 by the result of step 104, the portion of particles exceeding the sieve size can be determined, and used for decreasing the length of cut as described above. The steps 106 to 114 of figure 4 can be subsequently repeated for different, decreasing sieve sizes in order to obtain a histogram or the like of the particle size distribution.

It should be mentioned that different modifications to the invention are possible. For example, it would be possible to use any type of (second) sensor for detecting crop properties, like the moisture or compressibility, instead of, or in addition to, the input means 90, in order to establish a desired length of cut dependent on crop properties. Preferably, the operator can switch between an automatic and a manual mode. Such a second sensor for detecting moisture could be a microwave sensor, a capacitive sensor, an optical sensor, or a conductivity sensor. The crop parameter sensor 38 can also be located at a point on the harvesting machine 10 between the chopper means 22 and the rotatable support of the discharge chute 26 on the body of the harvesting machine 10.

## Claims

1. A harvesting machine (10) comprising:
a chopper means (22) for cutting harvested crop into short lengths,
a crop feed arrangement for feeding the harvested crop to the chopper means (22),
a drive arrangement for driving the crop feed arrangement and the chopper means (22), the drive arrangement including at least one adjustable component for driving at least one of said crop feed arrangement or chopper means (22) at a variable speed so as to change the length into which the harvested crop is cut,
a control device (88) connected to the adjustable component and to a granulometric sensor (38), said control device (88) operative to automatically control the adjustable component such that the length of the chopped crop detected by the granulometric sensor corresponds to a desired length,
the granulometric sensor (38) comprising a camera (44) arranged to view upon the chopped crop downstream the chopper means (22) and to provide image data representing images of the chopped crop particles to an image processing system (92) that is operable to derive the length of the chopped crop particles (50) from the image data,
**characterized in that** the image processing system (92) is operable to investigate for each particle (50) in an image whether it falls through a grid (96) of predetermined size and shape in order to derive the length of the chopped crop particles (50).

2. A harvesting machine (10) according to claim 1, **characterized in that** the image processing system (92) is operable to apply subsequently grids (96) of different sizes to the particles (50) in the image to obtain a size distribution.

3. A harvesting machine (10) according to claim 2, **characterized in that** the control unit (88) is operable to reduce the length of cut if in the size distribution the portion of particles (50) exceeding the desired length is above a predetermined threshold.

4. A harvesting machine (10) according to one of claims 1 to 3, **characterized in that** the control device (88) is connected to an input means (90) for inputting a desired length of cut.

5. A harvesting machine (10) according to claim 4, **characterized in that** the input means (90) is operable to receive a cut length input by an operator.

6. A harvesting machine (10) according to claim 4 or 5, **characterized in that** the input means (90) is connected to another sensor for sensing crop properties like moisture that are used by the input means (90) to establish a desired length of cut dependent on the sensed crop properties.

7. A method of controlling a harvesting machine (10), the harvesting machine (10) including:
a chopper means (22) for cutting harvested crop into short lengths,
a crop feed arrangement for feeding the harvested crop to the chopper means (22),
a drive arrangement for driving the crop feed arrangement and the chopper means (22), the drive arrangement including at least one adjustable component driving at least one of said crop feed arrangement or chopper means (22) at a variable speed so as to change the length into which the harvested crop is cut,
a control device (88) connected to the adjustable component and to a granulometric sensor (38), said control device (88) automatically controlling the adjustable component such that the length of the chopped crop detected by the granulometric sensor corresponds to a desired length,
the granulometric sensor (38) comprising a camera (44) viewing upon the chopped crop downstream the chopper means (22) and providing image data representing images of the chopped crop particles to an image processing system (92) that derives the length of the chopped crop particles (50) from the image data,
**characterized in that** the image processing system (92) is investigating for each particle (50) in an image whether it falls through a grid (96) of a predetermined size and shape in order to derive the length of the chopped crop particles (50).

## Patentansprüche

1. Erntemaschine (10), umfassend:
ein Häckslermittel (22) zum Schneiden von Erntegut in kurze Längen,
eine Erntegutzuführanordnung zum Zuführen des geernteten Ernteguts zu dem Häckslermittel (22),
eine Antriebsanordnung zum Antreiben der Erntegutzuführanordnung und des Häckslermittels (22), wobei die Antriebsanordnung mindestens ein einstellbares Bauteil zum drehzahlvariablen Antreiben der Erntegutzuführanordnung und/oder des Häckslermittels (22) enthält, um so die Längen zu ändern, in die das Erntegut geschnitten wird,
eine Steuereinrichtung (88), die mit dem einstellbaren Bauteil und mit einem granulometrischen Sensor (38) verbunden ist, wobei die Steuereinrichtung (88) dahingehend arbeitet, dass sie das einstellbare Bauteil automatisch derart steuert, dass die Länge des gehäckselten Ernteguts, die von dem granulometrischen Sensor erfasst wird, einer erwünschten Länge entspricht,
den granulometrischen Sensor (38), der eine Kamera (44) umfasst, die zur Betrachtung des gehäckselten Ernteguts stromabwärts des Häckslermittels (22) und zur Bereitstellung von Bilddaten, die Bilder der gehäckselten Erntegutpartikel darstellen, an ein Bildverarbeitungssystem (92), das dahingehend arbeitet, die Länge der gehäckselten Erntegutpartikel (50) von den Bilddaten abzuleiten, angeordnet ist,
**dadurch gekennzeichnet, dass** das Bildverarbeitungssystem (92) dahingehend arbeiten kann, für jeden Partikel (50) in einem Bild zu untersuchen, ob es durch ein Gitter (96) vorbestimmter Größe und Form fällt, um die Länge der gehäckselten Erntegutpartikel (50) abzuleiten.

2. Erntemaschine (10) nach Anspruch 1, **dadurch gekennzeichnet, dass** das Bildverarbeitungssystem (92) dahingehend arbeiten kann, anschließend Gitter (96) verschiedener Größen auf die Partikel (50) in dem Bild anzuwenden, um eine Größenverteilung zu erhalten.

3. Erntemaschine (10) nach Anspruch 2, **dadurch gekennzeichnet, dass** die Steuereinheit (88) dahingehend arbeiten kann, die Schnittlänge zu reduzieren, wenn in der Größenverteilung der Teil an Partikeln (50), der die erwünschte Länge übersteigt, über einer vorbestimmten Schwelle liegt.

4. Erntemaschine (10) nach einem der Ansprüche 1 bis 3, **dadurch gekennzeichnet, dass** die Steuereinrichtung (88) mit einem Eingabemittel (90) zur Eingabe einer erwünschten Schnittlänge verbunden ist.

5. Erntemaschine (10) nach Anspruch 4, **dadurch gekennzeichnet, dass** das Eingabemittel (90) dahingehend arbeiten kann, eine von der Bedienperson eingegebene Schnittlänge zu empfangen.

6. Erntemaschine (10) nach Anspruch 4 oder 5, **dadurch gekennzeichnet, dass** das Eingabemittel (90) mit einem weiteren Sensor zum Ermitteln von Ernteguteigenschaften wie Feuchtigkeit, die von dem Eingabemittel (90) verwendet werden, um in Abhängigkeit der ermittelten Ernteguteigenschaften eine erwünschte Schnittlänge festzustellen, verbunden ist.

7. Verfahren zum Steuern einer Erntemaschine (10), wobei die Erntemaschine (10) Folgendes enthält:
ein Häckslermittel (22) zum Schneiden von Erntegut in kurze Längen,
eine Erntegutzuführanordnung zum Zuführen des Ernteguts zu dem Häckslermittel (22),
eine Antriebsanordnung zum Antreiben der Erntegutzuführanordnung und des Häckslermittels (22), wobei die Antriebsanordnung mindestens ein einstellbares Bauteil zum drehzahlvariablen Antreiben der Erntegutzuführanordnung und/oder des Häckslermittels (22) enthält, um so die Längen zu ändern, in die das Erntegut geschnitten wird,
eine Steuereinrichtung (88), die mit dem einstellbaren Bauteil und mit einem granulometrischen Sensor (38) verbunden ist, wobei die Steuereinrichtung (88) das einstellbare Bauteil automatisch derart steuert, dass die Länge des gehäckselten Ernteguts, die von dem granulometrischen Sensor erfasst wird, einer erwünschten Länge entspricht,
den granulometrischen Sensor (38), der eine Kamera (44) umfasst, die das gehäckselte Erntegut stromabwärts des Häckslermittels (22) betrachtet und einem Bildverarbeitungssystem (92), das die Länge der gehäckselten Erntegutpartikel (50) von den Bilddaten ableitet, Bilddaten, die Bilder der gehäckselten Erntegutpartikel darstellen, bereitstellt,
**dadurch gekennzeichnet, dass** das Bildverarbeitungssystem (92) für jeden Partikel (50) in einem Bild untersucht, ob es durch ein Gitter (96) einer vorbestimmten Größe und Form fällt, um die Länge der gehäckselten Erntegutpartikel (50) abzuleiten.

## Revendications

1. Machine de récolte (10), comprenant:
des moyens de hachage (22) pour couper une culture récoltée en tronçons courts,
un agencement d'alimentation de culture pour amener la culture récoltée jusqu'aux moyens de hachage (22),
un agencement d'entraînement pour entraîner l'agencement d'alimentation de culture et les moyens de hachage (22), l'agencement d'entraînement comprenant au moins un composant réglable qui entraîne au moins soit ledit agencement d'alimentation de culture, soit les moyens de hachage (22) à une vitesse variable de manière à modifier la longueur à laquelle la culture récoltée est coupée,
un dispositif de commande (88) qui est connecté au composant réglable et à un détecteur granulométrique (38), ledit dispositif de commande (88) commandant de façon automatique le composant réglable de telle sorte que la longueur de la culture hachée détectée par le détecteur granulométrique corresponde à une longueur souhaitée,
le détecteur granulométrique (38) comprenant une caméra (44) orientée vers la culture hachée en aval des moyens de hachage (22) et fournissant des données d'image qui représentent des images des particules de la culture hachée à un système de traitement d'image (92) qui dérive la longueur des particules (50) de la culture hachée à partir des données d'image,
**caractérisée en ce que** le système de traitement d'image (92) peut être activé pour vérifier si chaque particule (50) dans une image tombe à travers une grille (96) d'une taille et d'une forme prédéterminées dans le but de dériver la longueur des particules (50) de la culture hachée.

2. Machine de récolte (10) selon la revendication 1, **caractérisée en ce que** le système de traitement d'image (92) peut être activé pour appliquer ensuite des grilles (96) de tailles différentes aux particules (50) dans l'image pour obtenir une distribution par taille.

3. Machine de récolte (10) selon la revendication 2, **caractérisée en ce que** l'unité de commande (88) peut être activée pour réduire la longueur de coupe si, dans la distribution par taille, la partie des particules (50) qui dépassent la longueur souhaitée est supérieure à un seuil prédéterminé.

4. Machine de récolte (10) selon l'une quelconque des revendications 1 à 3, **caractérisée en ce que** le dispositif de commande (88) est connecté à des moyens d'entrée (90) pour entrer une longueur de coupe souhaitée.

5. Machine de récolte (10) selon la revendication 4, **caractérisée en ce que** les moyens d'entrée (90) peuvent être activés pour recevoir une longueur de coupe qui est entrée par un opérateur.

6. Machine de récolte (10) selon la revendication 4 ou 5, **caractérisée en ce que** les moyens d'entrée (90) sont connectés à un autre détecteur pour détecter les propriétés de la culture, telles que l'humidité, qui sont utilisées par les moyens d'entrée (90) pour établir une longueur de coupe souhaitée en fonction des propriétés détectées de la culture.

7. Procédé pour commander une machine de récolte (10), la machine de récolte (10) comprenant:
des moyens de hachage (22) pour couper une culture récoltée en tronçons courts,
un agencement d'alimentation de culture pour amener la culture récoltée aux moyens de hachage (22),
un agencement d'entraînement pour entraîner l'agencement d'alimentation de culture et les moyens de hachage (22), l'agencement d'entraînement comprenant au moins un composant réglable qui entraîne au moins soit ledit agencement d'alimentation de culture, soit les moyens de hachage (22) à une vitesse variable de manière à modifier la longueur à laquelle la culture récoltée est coupée,
un dispositif de commande (88) qui est connecté au composant réglable et à un détecteur granulométrique (38), ledit dispositif de commande (88) commandant de façon automatique le composant réglable de telle sorte que la longueur de la culture hachée détectée par le détecteur granulométrique corresponde à une longueur souhaitée,
le détecteur granulométrique (38) comprenant une caméra (44) orientée vers la culture hachée en aval des moyens de hachage (22) et fournissant des données d'image qui représentent des images des particules de la culture hachée à un système de traitement d'image (92) qui dérive la longueur des particules (50) de la culture hachée à partir des données d'image,
**caractérisé en ce que** le système de traitement d'image (92) vérifie si chaque particule (50) dans une image tombe à travers une grille (96) d'une taille et d'une forme prédéterminées dans le but de dériver la longueur des particules (50) de la culture hachée.
